(19) Europäisches Patentamt / European Patent Office / Office européen des brevets

(11) **EP 3 373 230 A1**

(12) **EUROPEAN PATENT APPLICATION**

(43) Date of publication:
**12.09.2018 Bulletin 2018/37**

(51) Int Cl.:
***G06Q 40/08*** (2012.01)

(21) Application number: **18159947.3**

(22) Date of filing: **05.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.03.2017 IT 201700025082**

(71) Applicant: **Rossi, Frediano**
**63074 San Benedetto del Tronto (AP) (IT)**

(72) Inventor: **Rossi, Frediano**
**63074 San Benedetto del Tronto (AP) (IT)**

(74) Representative: **Vatti, Francesco Paolo et al**
**Fumero S.r.l**
**Pettenkofferstrasse 20/22**
**80336 Munich (DE)**

(54) **RISK DATA MANAGEMENT METHOD AND SYSTEM**

(57)     A method is disclosed for assessing those risks that need to be insured, which envisages the arrangement at the locations of the insured parties of devices aimed at detecting the events that have been insured against risks and the initial detection of the data sources registered by such devices. According to the invention, said method comprises the following steps: a) collection of data relating to the insured events by said devices; b) transmission of such data to a central processing system; c) processing of data from all devices at the locations of the insured parties, according to computational models envisaging aggregation and classification of events; d) transmission of warning alerts when a determined tolerance threshold is exceeded by a group of results coming from suitable statistical computations; e) creation of a map for each risk. A risk assessment system aimed at insured parties is also disclosed, which comprises a se- ries (1A... In) of devices for the detection of insured events, located at the main locations of the insured parties themselves, communication means (3A... 3n), which are able to transfer the data collected by said detection devices (1A... In) to a central processing unit (2), such as a server, a computer or a cloud device, which is also part of the system, and means (5) for viewing and/or print- ing and/or downloading results.

Fig. 1

EP 3 373 230 A1

## Description

The present invention relates to a system and a method for managing a considerable amount of data (the so-called big data) relating to risks, especially useful for insurance, yet exploitable also in other security-related fields.

Since its appearance on Earth, every day mankind is exposed to more or less serious risks. Actually, this pertains not only to the history of the human kind, but also to the single story of every man's life: the risks begin from conception and end with death.

Although risks are unavoidable, there are several ways to contain and reduce them. Thus, medicine helped reduce many risks to health and life itself to minimum rates: for example, infant mortality was a scourge until the nineteenth century and nowadays, at least in the rich part of the world, is almost negligible.

However, in addition to disease risks, there are many other risks, such as theft, violence, weather events, accidents and others; attempts are made to avoid these risks, too, even if not always successfully.

A series of risks which may be contained only to a limited extent is related to individual properties. If we consider, for example, a house, it is commonly subject to a certain number of dangers, which are largely beyond the owner's will and ability to cope with them. For example, a house may be subject to theft, fire, flood, gas leaks, earthquakes, which can lead to different types of damage, ranging from the loss of objects contained in it to its destruction and/or inaccessibility.

A part of these risks is faced in various ways, with more stringent construction laws (e.g., earthquake-proof buildings, presence of leak detectors, maintenance obligations); even theft is faced by using alarm systems with anti-intrusion sensors, perimeter infra-red detectors, but also more trivially by setting up railings and defences or by using armed surveillance of the house. However, even the most sophisticated remedies can limit, but not completely eliminate risks. Therefore, several centuries ago insurance companies were founded; in spite of not being able to avoid the appearance of the problem (or being able to do it only minimally), they compensate for the damage occurring by reason of an adverse and unforeseen event. Therefore, there are insurances covering theft, fire, structural collapses, damage caused by a sudden power outage, damage to third parties due to broken pipes and others. Insurance companies require the customer to pay them some sort of fee - in jargon referred to as premium - which is received by the insurance company to raise a capital, from which it draws the money to pay possible compensation and its own income (revenue). Since insurance companies are usually profit-seeking firms, also to be able to carry on their business, they need to pursue the maximum profit possible.

Seeking a satisfactory profit is a more complicated activity for insurance companies than for other kinds of companies. The events the compensation of which is the reason why insurances are entered into are, by definition, unpredictable and accidental; so it could happen, at least in principle, that a house or business site is robbed three times in a row within a month, whereas another one has been not robbed for forty years, without there being any particular reason *per* se for this situation; however, insurance statistics shows that if a theft occurs in a location, the probability that a theft will occur soon in the same location is higher than in other areas. Moreover, the extent of the theft might considerably vary between two houses or business sites, and the theft in one would result in a much higher compensation than in another, even if the compensation actually depends on the insured capital and the chosen insurance method. Therefore, this makes it difficult for companies to decide the amount of the insurance premium, in order to, on the one hand, not leave the market and, on the other hand, to maintain a profit. However, although the insurance statistics have considerably refined their methods and takes into account a large number of important factors, based on data acquired when a policy is entered into, it is currently able to take into account only a limited extent of the possible actual risks of the individual insured party, tending to spread over the entire customer pool or, for example, on the customer pool by geographical area and by type (for example, entering into a theft insurance has lower taxation for a restaurant business than for a jewellery business). Obviously, the starting point is statistics: the more likely an event is, the higher the premium and/or the deductible will be. Furthermore, the premium depends on the value of the asset to be insured - this is a easier parameter to consider.

In order to maintain a reasonable profit, insurance companies tend to consider different parameters, which then give rise to a risk "premium", in order to avoid losing profits hazardously or even facing a deficit.

In order to reduce the amount of claims paid, the Companies should be able to monitor the single location of a risk in real time. This would allow them to verify the increase in the probability of the occurrence of a harmful event, linked to a particular client, so as to propose (or to implement directly) prevention measures to limit risks. This is not possible these days, since there is no universal data collection.

Nowadays, some insurance companies provide customers with a device containing a mixed system resembling a set of burglar alarm, fire alarm, water leak detector, which, when installed in the building, monitors risks.

So far, insurance assessment and appraisal systems do not apply the concept of the event predictability as much as the risk quotation linked to the homogeneous features of those data related to "similar risks". Thanks to sensors, the risk undertaking and quotation makes the statistical cohort for detecting the insurance contract hazard more accurate and delimited, determining a more careful risk selection and quotation, but it does not include a prediction of the harmful event. Therefore, these systems do not use algorithms to predict the event, so that the processed results are not taken into account in the risk quotation, thus they can not be changed accordingly, based on whether a risk probability is increased.

Furthermore, among the variety of risks, from vehicles to buildings, emphasis is placed on the insurance risk management methodology with reference only to a single risk map.

Finally, the detection systems constitute a set of sensors installed on the single building location, without the contribution of other external information, providing that the risk quotation and undertaking is calibrated only once during the contractual life of an insurance coverage with specific reference to the risks of buildings.

US2005/0055248 extensively describes the use and management of detectors of physical quantities, including motion, fire, burglar, position (GPS) detectors and the like. The data obtained from these detectors are used to monitor harmful events and are reprocessed to evaluate and calculate the insurance premium. The cost for the technology in use is added to the premium calculation.

US2008/0065427 describes in a more focused way especially the management of those data detected on site by devices similar to those used in US2005/0055248, focusing more on an insurance point of view. The patent refers in particular to the real estate sector, taking into account the so-called housing risk. Here again, the ultimate goal is the assessment and calculation of the insurance premium.

US2014/0136242 refers to domotics. The computerised planning of the management of data obtained by means of detectors in residential homes is performed. It uses such data to assess and calculate an insurance premium.

The underlying problem of the invention is to provide a method and a device able to overcome the above mentioned drawbacks and allowing a greater risk prevention and a better premium and compensation quotation for the insurance company, also drawing predictions on the types of risks that could occur. In particular, the present invention is intended to keep the location of the single risk monitored in real time and to verify the possible increase or decrease in the probability of occurrence of a harmful event. Such objects, according to a first aspect, are achieved by using a method for assessing those risks that need to be insured, which envisages the arrangement - at the locations of the insured parties - of devices aimed at detecting the events that have been insured against risks and the initial detection of the data sources registered by such devices, characterised in that it comprises the following steps: a) collection of data relating to the insured events by said devices; b) transmission of such data to a central processing system; c) processing of data from all devices at the locations of the insured parties, according to computational models envisaging aggregation and classification of events; d) transmission of warning alerts when a determined tolerance threshold is exceeded by a group of results from suitable statistical computations; e) creation of a map for each risk.

According to a second aspect, the present invention comprises a risk assessment system aimed at insured parties, characterised in that it comprises a series of devices for the detection of insured events, such devices being located at the sites of the insured parties, communications means able to transfer the data collected by said detection devices to a central processing unit, which is also part of the system, and means for issuing the corresponding results. The dependent claims describe preferred features of the invention.

Further features and advantages of the invention will anyhow be more apparent from the following detailed description of a preferred embodiment, given by mere way of non-limiting example and illustrated in the accompanying drawings, wherein:

fig. 1 is a schematic diagram illustrating the risk assessment system according to an embodiment of the present invention;

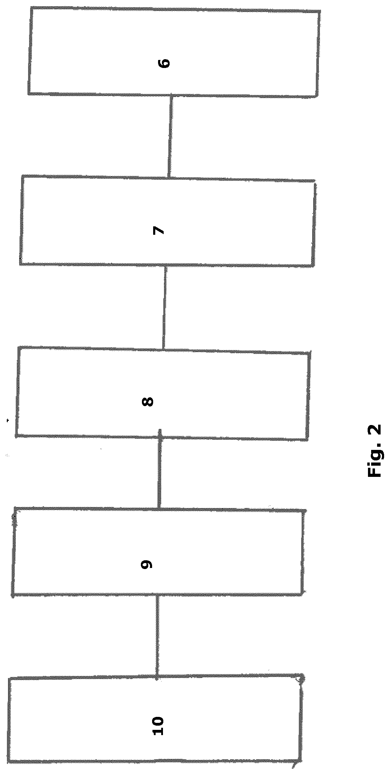

fig. 2 represents a block diagram illustrating the operating principles according to the present invention, and

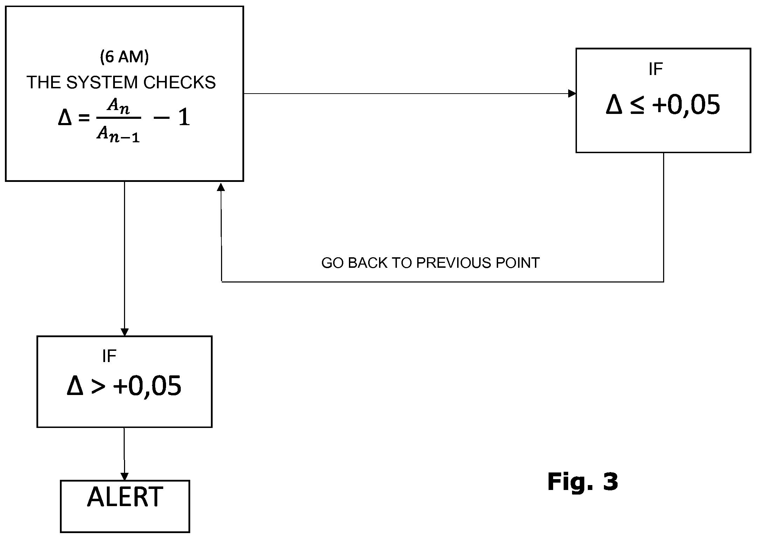

fig. 3 represents a block diagram illustrating the key points of an algorithm, according to a preferred embodiment.

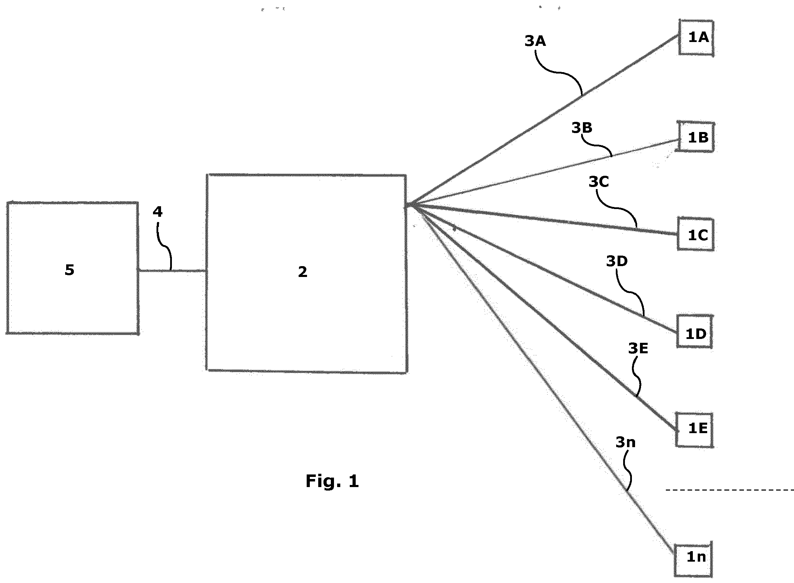

The system according to the present invention is illustrated schematically in fig. 1.

The system comprises a series of devices 1A... 1n, suitable for detecting data relating to one or more types of events subject to insurance. The sensing devices 1A... 1n may be independent detection devices, which detect events thanks to a connection with other equipment. For example, it may be a device connected to a burglar alarm, which detects when the burglar alarm starts ringing. Advantageously, the activation of the burglar alarm is detected only when it is not manually disabled for a certain threshold time (*e.g.*, 1.5 min). False alarm detections are thus eliminated, or at least reduced. Similarly, it may be a device connected to a gas detector, a fire fighting system, a water leak detector, and so on. Preferably, the devices 1A... 1n are connected to more than one of such detectors. Such devices 1A... 1n may be installed by the insured parties when the policy is entered into.

It is also possible that the anti-theft devices, gas detector, fire detector, water leakage detector and so on involve a communication protocol, for example a SIA-IP protocol including a unique identification code, which can be sent from such devices directly to the desired locations via Ethernet network, wireless network, GSM/GPRS network, other types of wired networks, by ADSL or optical fibre data transmission technology, or via radio. In this case, the device 1A... 1n consists directly of one or more of such detectors, since they may be programmed to send directly the detected data, with no need for additional devices: it will be sufficient that the devices 1A ... 1n are suitably programmed by a technician once the policy is entered into.

The devices 1A... 1n are connected in a known manner - for example via LAN cable, via Ethernet network, via telephone or wirelessly - with a data collection and processing unit 2. The connections are shown in fig. 1 with the reference numbers 3A... 3n. The unit 2 can be of any known type, in particular it can be a server or a computer. Advantageously, given the amount of data that will be collected by the devices 1A... 1n, it is preferred that the central processing unit 2 is a cloud device. In this way, there are not memory issues, access is available from multiple, even physically distant, sites, and a high processing speed is provided.

Then, a connection 4 carries the results from the processing performed in unit 2 to a result output unit 5. As for connections 3A... 3n, connection 4 may be of any known type, e.g., via LAN cable, via Ethernet network, via telephone or wirelessly.

The result output unit 5 may be a display, a printer, a computer network terminal, a signalling device, depending on the insurer's needs.

The operation of the system according to the present invention is now illustrated, together with the method according to the present invention.

Devices 1A... 1n, regardless of their type, are activated and are always ready to transmit data. During a step 6 of the method according to the present invention, the devices 1A... 1n, which are located where an event for which an insurance has been entered into occurs, detect this event, possibly verify, prior to the next step 7 (granting some time to allow manual deactivation in case of false alarm), whether the alarm is real and, if so, transmit in the step 7 of the method the signalling of the event via connection 3A... 3n to the data collection and processing unit 2. Preferably, this signalling includes the type of occurred event, an identification code of the apparatus involved (e.g., a SIA-IP code). Possibly, also other data, such as date and time or other, can be transmitted in step 7 to the data collection and processing unit 2. In a preferred but not exhaustive, nor limiting way, the data collected in step 6 and transmitted in step 7 are:

    1) Company;
    2) Code associated with the risk;
    3) Location of the risk, address or geographical coordinates: all locations must be correlated to the geographical coordinates for the purpose of the algorithm computations;
    4) Risk classification codes are the ATECO classifications or tables specific for each individual company to be reclassified;
    5) Some Companies may decide to send other data such as tax code, VAT number, policy number. Preferably, the unique customer code is sufficient to generate a report which can be used to link the received info to the CRM (CUSTOMER RELATIONSHIP MANAGEMENT) of the Companies (Salesforce, Microsoft, etc);
    6) If there is direct co-insurance - the alerts/notifications are to be sent only to the delegating Company - however, multiple sending to all co-insurers participating in the risk should be provided.

The transmission takes place in real time, so that the data held by the unit 2 are always updated.

The data received by the data collection and processing unit 2 - which may be international standards (CONTACT-ID or SIA-IP) able to send a description (encrypted or unencrypted) of the event, or data coming from different protocols or even from proprietary protocols - thanks to the high versatility of the system according to the present invention - are at first aggregated, so that they can then be categorised as deemed most appropriate (step 8). For example, they may be categorised by type of event (theft, fire, flood...), geographic area (town, province, region, macro-area), type of client (commercial, industrial, institutional, private...), type of activity (residential, electronics, chemistry, school...) or others; it may also happen that the same event falls into subsets belonging to multiple categories, in order to be able to provide multiple results for each event.

In the next step 9, the data available in the unit 2 are processed. Normally, data are entered to be processed in one or more specific algorithms, which allow to retrieve from data the desired information, thus allowing to predict or identify the increase in the probability of the occurrence of certain events, thus creating actual risk maps. These maps - grouped according to the risk of interest - may be selected by geographical area (it could be important for the insurance to know that an area is more exposed to thefts than another), but could also be selected by type of customers.

The processing results are then transmitted, via connection 4, in step 10, to the result output unit 5, where such results can be read in an appropriate manner.

In particular, the present invention preferably provides the use of at least six suitable algorithms which process the event signals coming from various sensors installed in specific anti-theft and fire fighting systems.

According to a first algorithm, on a pre-set range of coverage the system updates, processes and signals events - e.g., classified with the SIA-IP code - indicating the power outage at the monitored adjacent sites. If such events occur within a predetermined time span of minutes and/or hours, the system makes sure to send an alert to indicate an increase in the probability of occurrence of damage due to electrical issues - e.g., fires caused by overvoltage of the electric current - to those sites and customers directly involved in the area and also to the sites where no signalling of power outage was detected, in order to disclose a possible damage due to electrical issues which could occur in the affected area, due to the presence of Uninterruptible Power Supplies or other types of power self-generation systems, such as those from renewable sources.

For this algorithm, the event codes from AT (AC TROUBLE), identifying power outage, and AR (AC RESTORAL), identifying power restoration, SIA-IP protocols are preferably used.

According to a second algorithm, on a predetermined range of coverage the system updates, processes and signals events - *e.g.,* classified with the SIA-IP code - indicating troubles in the normal execution of data transmission through the telephone network - for example ADSL and optical fibre technologies - and radio interference events at monitored adjacent sites. If such events occur within a predetermined time span of minutes and/or hours, the system makes sure to send an alert to indicate an increase in the probability of occurrence of theft to those sites and customers directly involved in the area and also to the sites where no signalling of theft was detected - *e.g.*, to plan a theft, it may happen that a deceptive minor damage attempt is made - the so-called decoy - and/or the telephone exchange near the affected area at the targeted site is skewed, in order to record if and how fast the police can intervene.

For this algorithm, the event codes from LT (PHONE LINE TROUBLE) and LR (PHONE LINE RESTORAL), indicating issues related to the telephone network, NT (NETWORK FAILURE), NR (NETWORK RESTORAL) and NC (NETWORK CONDITION), indicating issues related to the telematic network, XQ (RF INTERFERENCE) and XH (RF INTERFERENCE RESTORAL), indicating issues related to radio signals, SIA-IP protocols are preferably used.

According to a third algorithm, the system stores and processes the data recorded on a predetermined range of coverage within a fixed number of months before theft events - *e.g.,* classified with SIA-IP code. Data are collected in the province of the affected sites, but it is not excluded that they could also include data coming from neighbouring provinces. These data, sorted by economic category - *e.g.*, by ATECO nomenclature - are collected and processed to calculate an arithmetic moving average of different kinds - *e.g.* simple, weighted, exponential, adaptive moving average - thus generating signals which are more or less sensitive to changes in data and/or other types of analysis - *e.g.* by using statistical methods on data populations or on individual samples. These results are then used in further formulas to obtain a series of values. If a value resulting from the computations exceeds a determined tolerance threshold, the system makes sure to send an alert to the customers, belonging to the signalled category, about an increase in the probability of occurrence of a theft event in the following days or weeks. To support this, a serial theft aimed at a specific category of goods and/or a particular product may thus be predicted and avoided because of the information sent to the affected sites and customers, who have not yet suffered this event, but who may be targeted by serial theft.

For this algorithm, the event code from BA (BURGLARY ALARM) SIA-IP protocol identifying the event of burglary is preferably used.

According to a fourth algorithm, the system stores the results coming from the previous statistical computations, belonging to a determined period of months, on a geographically identified area - province, city - for subsequent processing, through certain formulas for the visualization of a probability trend. If a value exceeds a certain tolerance threshold, the sites monitored in that area are alerted about an increase in the probability of occurrence of an event of indiscriminate theft by passing offenders who perpetrate a series of thefts and damages at random.

For this algorithm, the event code from BA (BURGLARY ALARM) SIA-IP protocol identifying the event of burglary is still preferably used.

According to a fifth algorithm, the system stores and processes the results coming from said statistical computations, belonging to a determined period of previous months, to be collected and reclassified by category of theft event and power outage event, and indexed at the affected sites within a defined monitoring range. If in that area an increase in the frequency of events is reported, this leads to a change in the external environmental conditions - e.g., the closure of a road, works in progress and renovations - that facilitate the action of a theft or a damage due to electric issues. From this analysis and subsequent re-processing of these results, through probabilistic models, when a certain tolerance threshold is exceeded, an alert is sent to warn the involved customers that their respective sites are possible targets for theft events or they are more exposed to damage, due to electric issues.

For this algorithm, the event codes from BA (BURGLARY ALARM), AT (AC TROUBLE) and AR (AC RESTORAL) SIA-IP protocols are preferably used.

According to a sixth algorithm, the system stores and processes the data coming from theft events at a single site. If within the specific time span of a day, with respect to a time span, a series of theft events exceeding a tolerance threshold occurs, a warning alert is sent about the high probability of an imminent or ongoing theft. The reason would be that the theft could be intentionally preceded by a series of alerts within a short time span for the deceptive purpose of suggesting a malfunction of the alarm system, thus reducing the attention of the customer on a real attempt of theft soon.

For this algorithm, the event code of the BA (BURGLARY ALARM) SIA-IP protocol is preferably used.

According to a preferred embodiment, the algorithm 3 is developed according to a method whereby all the risk locations - classified by ATECO- are grouped together in a set F (F $_{1 \text{ (Cod. ATECO 1.11.10)}}$, F$_{2(\text{Cod. ATECO 1.11.20})}$, F$_{3(\text{Cod. ATECO 1.11.30})}$, ... F $_x$), a subset of a set G (F $\subset$ G) to which the risk locations classified by province and neighbouring provinces belong, with a monitoring range equal to or greater than a determined number of M kilometres (for example M ≥ 10 Km). Considering a set L of all events under the nomenclature of the SIA-IP protocol, a subset R of codes reclassified into the burglary alarm category is determined (R c L).

After defining the data subset $F_x$, the system calculates the arithmetic moving average over a time range of 120 days prior to the calculation date, according to the formula:

$$A_n = \frac{1}{K} \sum_{t=-120}^{-1} R_t^{(F_x \subset G)}$$

Wherein K indicates the number of monitored locations, t indicates the observation day, $F_x$ indicates the risk location with an x number classified by ATECO among the risk locations - group G - classified by province and neighbouring provinces, for a determined monitoring area, and $R_t$ the data of the SIA-IP code, corresponding to the day t, reclassified and belonging to the burglary alarm category among all the events - set L- of the SIA-IP code, related to the corresponding value $F_x$.

The operation is carried out at a given time - e.g. at six o'clock (6 AM) - calculated for the previous day, thus generating a historical series of moving averages of theft events within a determined period of previous days - e.g. 120 days - obtaining the results $A_1$, $A_2$, $A_3$, ... $A_n$ - in the example $A_1$, $A_2$, ... $A_{120}$ - each corresponding to a respective date.

Finally, the system uses these data $A_n$ and processes them, always in the same predetermined time, according to the formula:

$$\Delta = \frac{A_n}{A_{n-1}} - 1.$$

If the value $\Delta$ is less than or equal to a threshold of 0.05 ($\Delta \leq +0.05$), the system remains in steady state, otherwise ($\Delta > +0.05$) an alarm system is activated, which sends an alert signal to indicate a specific theft event.

The system uses the SIA-IP protocol for transmitting alarm codes and reclassifying them in the various sectors - e.g., burglary alarm, anti-theft system failure, fire alarm, fire fighting system failure, power failure, telephone network and network failure, opening/closing events - but the use of other communication protocols in the security sector is not excluded.

In principle, the various algorithms are not particularly important for the definition of the scope of protection of the present invention; it is also possible to use algorithms able to change over time, depending on the data entered and on the progress of the events, so as to give always the best results. This learning could, for example, take place through iterative computations, by minimising a target function. In step 9 it is important to interpolate data with historical events, so as to improve the risk selection and management.

Finally, the extremely dynamic nature of the method according to the present invention allows to have constantly up-to-date maps of the situation concerning the main accidents occurring to the customers of the involved insurance company.

In this way, the insurer may modulate the premium and/or compensation, taking into account the actual situation, and has the possibility to calibrate it even temporarily during the effectiveness of the insurance contract.

In this way, an insurer may also develop new products which, in addition to the conventional Property & Casualty coverages, can encompass new types of services.

It is also conceivable that the insurer offers customers a time-varying premium and/or compensation (e.g., setting a shorter periodic fee calculated on the basis of the results of the method according to the present invention or even according to payment methods depending on the risk trend, for example by loaning the institution of the premium adjustment, which nowadays is unthinkable, but could be made available thanks to the present invention). The present invention makes it possible to verify in real time the increase in the probability of accidents, even at the insured location/risk, which is not directly and immediately affected by such monitored events.

The method and the system according to the present invention have been conceived starting from the insurance problem; however, it is clear that the processing results can be of great interest also for law enforcement (Police, Finance Police and other police forces (Carabinieri), but also private surveillance agencies), for rescue (ambulances, firefighters), for credit institutions (which can better assess the security of uses during the payback period), for real estate agents (who, in the case of a safe area, can rely on this fact with data that will affect the price of buying and selling) and others.

It is understood, however, that the invention is not to be considered as limited by the particular arrangement illustrated above, which represents only an exemplary embodiment of the same, but different variants are possible, all within the reach of a person skilled in the art, without departing from the scope of the invention itself, as defined by the following claims.

LIST OF REFERENCE NUMERALS

| | |
|---|---|
| 1A... 1n | Devices for data collection |
| 2 | Central collection and processing unit |
| 3A... 3n | Connections (of 1A... 1n) |
| 4 | Connections (of 2) |
| 5 | Result output unit |

6 Step of data collection
7 Step of data transmission
8 Step of data categorisation
9 Step of data processing
10 Step of data transmission

## Claims

1. Method for assessing those risks that need to be insured, which envisages the arrangement - at the locations of the insured parties - of devices aimed at detecting the events that have been insured against risks and the initial detection of the data sources registered by such devices, **characterised in that** it comprises the following steps: a) collection of data relating to the insured events by said devices; b) transmission of such data to a central processing system; c) processing of data from all devices at the locations of the insured parties, according to computational models envisaging aggregation and classification of events; d) transmission of warning alerts when a determined tolerance threshold is exceeded by a group of results from suitable statistical computations; e) creation of a map for each risk.

2. Method according to claim 1), **characterised in that** during said step c) the aggregated data are categorised by type of event (theft, fire, flood, mains failure...), geographic area (town, province, region, macro-area), type of client (commercial, industrial, institutional, private...), type of activity (residential, electronics, chemistry, school...) and **in that** the same event falls into subsets belonging to multiple categories, in order to be able to provide multiple results for each event.

3. Method according to any one of the preceding claims, **characterised in that**, during said step c), the aggregated and categorised data are entered in one or more algorithms to be processed.

4. Method according to claim 3), **characterised in that** said algorithm, based on suitable statistical computational models, is implemented to transmit warning alerts to a number of locations of the insured parties not directly involved in an ongoing event, over a determined time span following said event.

5. Method according to claim 4), **characterised in that** said algorithm is implemented to process event data indicating the power outage at one or more locations of the insured parties, included in the same monitoring area and, according to a probability trend, to send warning alerts to said locations.

6. Method according to claim 5), **characterised in that**, for said algorithm, the event codes from AT (AC TROUBLE), identifying power outage, and AR (AC RESTORAL), identifying power restoration, SIA-IP protocols are preferably used.

7. Method according to any one of claims 4) to 6), **characterised in that** said algorithm is implemented to process event data indicating transmission complications via telephone network and radio interference events at one or more locations of the insured parties included in the same monitoring area and, according to a probability trend, to send warning alerts to said locations.

8. Method according to 7), **characterised in that**, for said algorithm, the event codes from LT (PHONE LINE TROUBLE) and LR (PHONE LINE RESTORAL), indicating issues related to the telephone network, NT (NETWORK FAILURE), NR (NETWORK RESTORAL) and NC (NETWORK CONDITION), indicating issues related to the telematic network, XQ (RF INTERFERENCE) and XH (RF INTERFERENCE RESTORAL), indicating issues related to radio signals, SIA-IP protocols are preferably used.

9. Method according to any one of claims 4) to 8), **characterised in that** said algorithm is implemented to process event data indicating theft at one or more locations of the insured parties included in the same monitoring area and, according to a probability trend, to send warning alerts to said locations.

10. Method according to any one of claims 4) to 9), **characterised in that** said algorithm is implemented to aggregate and process results from statistical computations relating to events occurred within a determined period of months at one or more locations of the insured parties, included in the same monitoring area and, according to a probability trend, to send warning alerts to said locations.

11. Method according to claims 9) and 10), **characterised in that**, for said algorithm, the event codes from BA (BURGLARY ALARM) SIA-IP protocol identifying the event of burglary are preferably used.

12. Method according to any one of claims 4) to 11), **characterised in that** said algorithm is implemented to aggregate and process results from statistical computations relating to events occurred within a determined period of months at one or more locations of the insured parties included in the same monitoring area, reclassifying said results into category subsets for the theft event and the power outage event and, according to a probability trend, to send warning alerts to said locations.

13. Method according to any one of claims 4) to 12), **characterised in that** said algorithm is implemented to process event data indicating theft within a short time span at a single location and, according to a probability trend, to send warning alerts to said locations.

**14.** Method according to claims 12) and 13), **characterised in that**, for said algorithm, the event codes from BA (BURGLARY ALARM), AT (AC TROUBLE) and AR (AC RESTORAL) SIA-IP protocols are preferably used.

**15.** Risk assessment system aimed at insured parties, **characterised in that** it comprises a series (1A... 1n) of devices for the detection of insured events, located at the main locations of the insured parties themselves, communication means (3A... 3n) able to transfer the data collected by said detection devices (1A... 1n) to a central processing unit (2), such as a server, a computer or a cloud device, which is also part of the system, and means (5) for issuing the results.

**16.** System according to claim 15), **characterised in that** said devices (1A... 1n) for the detection of insured events are selected from the group comprising independent detection devices, able to detect events thanks to a connection with one or more different devices, such as a burglar alarm, a gas detector, a fire fighting system, a water leaks detector, which envisage a communication protocol, such as the SIA-IP protocol including a unique identification code, which can be sent from such devices directly to the desired locations via Ethernet network, wireless network, GSM/GPRS network, other types of wired networks or via radio.

Fig. 1

Fig. 2

EP 3 373 230 A1

IF
$\Delta \leq +0,05$

GO BACK TO PREVIOUS POINT

(6 AM)
THE SYSTEM CHECKS
$$\Delta = \frac{A_n}{A_{n-1}} - 1$$

IF
$\Delta > +0,05$

ALERT

**Fig. 3**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/055248 A1 (HELITZER JONATHAN [US] ET AL) 10 March 2005 (2005-03-10) * abstract * * paragraph [0021] - paragraph [0042] * ----- | 1-16 | INV. G06Q40/08 |
| X | US 2008/065427 A1 (HELITZER JONATHAN A [US] ET AL) 13 March 2008 (2008-03-13) * abstract * * the whole document * ----- | 1-16 | |
| X | US 2014/136242 A1 (WEEKES JACK [US] ET AL) 15 May 2014 (2014-05-15) * abstract * * the whole document * ----- | 1-16 | |

TECHNICAL FIELDS
SEARCHED     (IPC)

G06Q

The present search report has been drawn up for all claims

| Place of search | Date of completion of the search | Examiner |
|---|---|---|
| The Hague | 23 May 2018 | Lozza, Mario |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                      
& : member of the same patent family, corresponding
    document

EPO FORM 1503 03.82 (P04C01)

## EP 3 373 230 A1

**ANNEX TO THE EUROPEAN SEARCH REPORT
ON EUROPEAN PATENT APPLICATION NO.**

EP 18 15 9947

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | Publication date | Patent family member(s) | Publication date |
|---|---|---|---|
| US 2005055248 A1 | 10-03-2005 | NONE | |
| US 2008065427 A1 | 13-03-2008 | US 2008065427 A1<br>US 2010174566 A1<br>US 2016225098 A1<br>US 2018114273 A1 | 13-03-2008<br>08-07-2010<br>04-08-2016<br>26-04-2018 |
| US 2014136242 A1 | 15-05-2014 | CA 2822792 A1<br>US 2014136242 A1 | 12-05-2014<br>15-05-2014 |

EPO FORM P0459

For more details about this annex : see Official Journal of the European Patent Office, No. 12/82

**EP 3 373 230 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050055248 A
- US 20080065427 A
- US 20140136242 A